# EUROPEAN PATENT APPLICATION

(11) **EP 1 843 278 A1**
(43) Date of publication of application: **10.10.2007**
(21) Application number: 06300321.4
(22) Date of filing: 03.04.2006
(51) Int. Cl.: G06K 19/077

(54) **Method for manufacturing an electronic module**

(71) Applicant: Axalto SA, 92120 Montrouge (FR)
(72) Inventor: Chambonneau, Charles, 92120, Montrouge (FR); Groeninck, Denis, 92120, Montrouge (FR); Welsch, Pierre-Alois, 92120, Montrouge (FR); Thuillard, Sandrine, 92120, Montrouge (FR); Salib, Rami, 92120, Montrouge (FR)
(74) Representative: Cour, Pierre

(57) **Abstract**

The invention relates to a an improved method for manufacturing an electronic module suitable for identification documents. The method consists in affixing an antenna (21) and a radio-frequency micro-controller (26) onto a transportation layer (24) intended to be removed before the insertion of the electronic module (12) in an identification document (14). This method allows to obtain an important gain of overall thickness, which leads to an improvement of the visual aspect of the surface of the identification document because there is no more extra-thickness.

## Description

The invention relates to a an improved method for manufacturing an electronic module suitable for identification documents, and to an intermediate electronic module.

The invention applies to all types of electronic identification documents, or travelling document, such as passports or identity card for example, made of paper booklet, of paperboard, or plastic card.

With the development of electronic identification documents, process have been implemented to include electronic devices, comprising an antenna and a radio frequency microcontroller electrically connected to said antenna, inside flexible document pages, flexible document covers, or flexible external layers in an efficient and robust way.

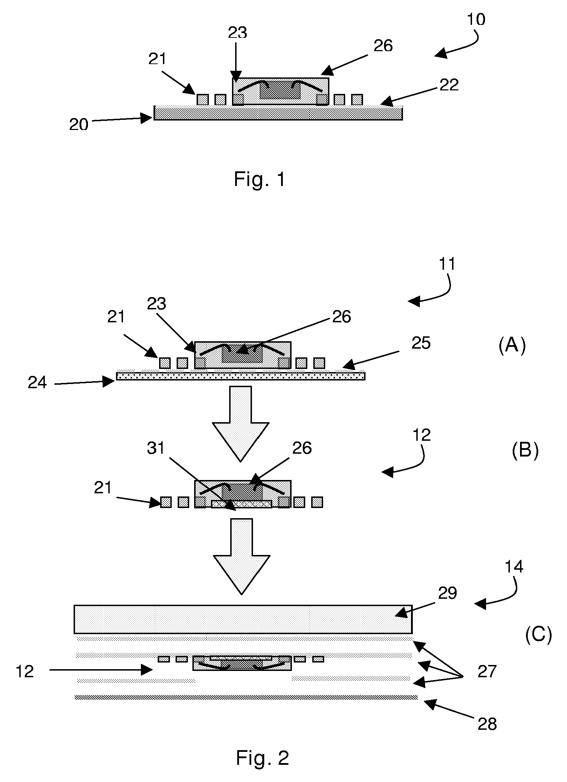

In figure 1, a prior art coil-on-module 10 is schematically illustrated. This module is called coil-on-module because the antenna is part of the module itself and not part of a separate body like an inlet plastic sheet. The module 10 includes a flexible support layer 20. This support layer 20 is made of a dielectric material, for example of a polymer material such as epoxy glass, polyimide or Kapton™. Its thickness is in the range 50 - 100 µm, in order to achieve a high degree of flexibility. Using standard manufacturing techniques of the electronics printed board industry, an antenna 21 is etched onto the support layer 20. This antenna 21 has two terminal ends on which a radio-frequency microcontroller 26 is connected by a conventional process such as wire bonding, or flip chip etc. An epoxy resin 23 is then dispatched on top of the microcontroller 26 and its connections, in order to ensure their protection. The radio-frequency micro-controller and the antenna are affixed onto the surface of the support layer by means of a glue layer 22, which has a thickness of around 50µm.

The radio-frequency micro-controller component incorporates the RFID (Radio Frequency Identification Device) technology. Therefore, it is capable of contactless communication with a reader according to communication protocols that are disclosed in the ISO-14443A and ISO-14443B standards.

The flexible support 20 of the current coil-on-modules 10 is cut off from a tape that is usually used in smart card industries, after the steps of manufacturing of the coil-on-modules. The obtained electronic coil-on-modules, after their cutting off from the tape, are embedded in identification documents, such as passport, made of paperboard or paper booklet, of plastic or paper for example.

However, the overall thickness of the support layer 20 and the glue layer 22, used on the support layer for sticking the antenna and the encapsulated radio-frequency micro-controller, is comprised between 100 and 200µm. This thickness is still too high for inserting the module in the thickness of a sheet in a completely invisible way, without creating extra thickness.

Furthermore, the material used for the flexible support layer, namely epoxy glass, polyimide or Kapton™, is an expensive material. Therefore, in a second aspect, the invention aims to reduce the manufacturing costs, in order to be able to produce in mass low cost passports or other identification documents for general public.

Considering the above, a problem intended to be solved by the invention is to develop a method for manufacturing an electronic module adapted for being inserted in an identification document, said electronic module including an antenna and a radio frequency micro-controller electrically connected to said antenna, said method providing electronic modules having a reduced thickness and being cheaper that those currently available.

The solution of the invention to this problem relates to the fact that the method comprises the steps of :
- affixing said antenna on a transportation layer,
- affixing said radio-frequency microcontroller onto said transportation layer,
- electrically connecting said radio-frequency micro-controller to said antenna,
- removing the transportation layer.

Thus, once the transportation layer is removed, an important gain of overall thickness is achieved. Moreover, the transportation layer being only used during the manufacturing process before being thrown, it can be made in a material much cheaper than the one used for the current flexible support layer.

The invention relates also to an intermediate electronic module comprising an antenna and a radio frequency micro-controller electrically connected to said antenna, wherein said module comprises a transportation layer to support the antenna and the radio-frequency micro-controller during the manufacturing steps, said transportation layer being intended to be removed before the insertion of the module in an identification document.

Thus, due to the fact that there is no more flexible support layer for supporting the antenna and the radio-frequency micro-controller, the overall thickness of the electronic module is smaller than the one of the currently available electronic modules.

For a better understanding of the present invention, reference will now be made, by way of example, to the following description of the invention and to the accompanying drawings, in which:
- figure 1, already described, is a schematic cross-section illustrating an electronic coil-on-module according to the prior art; and
- figure 2, is a schematic cross-sectional view of a coil-on-module according to the invention, during the manufacturing steps until its insertion in an identification document.

Corresponding numerals and symbols in the figures refer to corresponding parts, unless otherwise indicated.

In a first step A of manufacturing of the electronic coil-on-module 11, as illustrated in figure 2, an antenna 21 is affixed onto a transportation layer 24. The antenna is preferably made of copper. It can be either laminated or etched on the transportation layer 24.

A radio-frequency micro-controller 26 is also affixed onto the transportation layer, and simultaneously electrically connected to terminal ends of the antenna 21, by wire bonding or flip chip or other conventional process. It is then encapsulated in a protection resin 23.

For affixing the antenna 21 and the radio-frequency micro-controller 26 onto the transportation layer, a removable glue 25 is used. This glue is chosen in such a manner that the adhesion strength between the transportation layer 24 and the glue 25 is stronger than the adhesion strength between the glue 25 and the copper antenna 21. Indeed, thanks to this difference in the adhesion strength, the transportation layer 24 and the thin removable glue layer 25 can be removed by a simple peeling step, without destroying antenna 21 or RF micro-controller 26.

Such a glue layer is preferably made of a material that belongs either to the family of pressure sensitive adhesive, such as acrylic adhesive for example, or to the family of UV adhesive, or to the family of thermo-sensitive adhesive. When UV adhesive is used for example, the remaining adhesion between the glue and the copper antenna is lowered after irradiation so that the glue layer can be easily removed. When a thermo-sensitive glue is used, it's adhesion strength can be degraded after a heat treatment. In fact, every adhesive types which allow to be easily removed, by peeling for example, after having been submitted to a specific treatment or not, can be used.

An alternative embodiment consists in using a not removable glue layer, which remains on the copper antenna and which is used for affixing the obtained electronic module in an identification document. In this case, the glue is chosen in such a manner that the adhesion strength between the copper antenna and the glue is stronger than the one between the glue and the transportation layer. In this case, the thickness of this glue layer 25 lies preferably between 10 and 30 µm. Such thickness still allows to achieve an important gain of overall thickness of the module.

Advantageously, the transportation layer 24 may be made of a material belonging to the family of polyethylene or polyethylene terephtalate. This material presents a stronger adhesion with the acrylic glue than the one between the copper antenna and the glue. Moreover this material used for the transportation layer is much cheaper than the one used of the support of a conventional module.

Preferably, the thickness of the transportation layer 24 is comprised between 100 and 200 µm, in order to preserve a required rigidity and solidity during the manufacturing process.

A further step B, illustrated on figure 2, consists in removing the transportation layer 24. This removing is made in a simple way, for example by peeling. An alternative that could be used consists in removing the transportation layer 24 and the thin glue layer 25 by means of a chemical attack.

The peeling step can be made for example while unwinding the transportation layer from a reel. Then, the obtained coil-on-module 12 without support is placed into an identification document 14 (step C).

As illustrated on figure 2, steps B and C, an optional support 31 may be provided between the radio-frequency micro-controller 26 and the transportation layer 24, before the positioning of the RF micro-controller 26. This support 31 is preferentially made of copper and the radio-frequency micro-controller is affixed onto this support by means of a glue, such as an epoxy glue. This support 31 is not mandatory. It is provided for increasing the rigidity of the electronic module, when the transportation layer 24 has been removed, and during its manipulation and its insertion in an identification document.

The identification document 14 may be formed either by a smart card, or by a paper booklet as the conventional passport for example. When the coil-on-module is placed in a passport, it is generally, but not necessary, placed in the passport cover 29 as illustrated on figure 2C. In fact it is placed between the passport cover 29 and an internal paper sheet 28, and it is affixed by means of one or several glue layers 27, made of pressure sensitive glues or thermo-sensitive glues.

A first advantage of the method, and the coil-on-module obtained by this method, is that the temporary transportation layer is cheaper than the dielectric material used as support for conventional coil-on-modules.

A second advantage relates to the fact that the electronic module obtained by this method does not include any substrate to support the antenna and the radio-frequency micro-controller, so that an important gain of overall thickness can be obtained. This gain is of about 50 to 100 µm. Consequently, the visual aspect of the surface of the identification document is improved because there is no more extra-thickness.

Finally, other advantages concern an enhancement of the security of the identification document. Namely, it is no more possible to remove the coil-on-module from the cover without destroying it. Indeed, when the cover is delaminated, the antenna will be not functional anymore, because antenna turns being strongly fixed on paper sheets, they will be damaged. Consequently, an identification document comprising such an electronic module without support prevent any fraudulent person to delaminate the cover of a passport because if this is be done, the module is destroyed and not functional anymore.

## Claims

1. A method for manufacturing an electronic module adapted for being inserted in an identification document, said electronic module including an antenna (21) and a radio frequency micro-controller (26) electrically connected to said antenna, said method comprising the steps of :
- affixing said antenna (21) onto a transportation layer (24),
- affixing said radio-frequency microcontroller (26) onto said transportation layer (24),
- electrically connecting said radio-frequency micro-controller (26) to said antenna (21),
- removing the transportation layer (24).

2. A method as claimed in claim 1, wherein the antenna (21) and the radio-frequency microcontroller (26) are affixed onto the transportation layer (24) by means of a glue layer (25).

3. A method as claimed in claim 2, wherein the glue layer (25) has a thickness comprised between 10 to 30µm.

4. A method as claimed in claim 2 or 3, wherein the glue layer (25) is removed with the transportation layer (24).

5. A method as claimed in anyone of preceding claims 1 to 4, wherein a support (31) is provided between the RF micro-controller (26) and the transportation layer (24).

6. A method as claimed in claim 1, wherein the antenna (21) is a laminated copper wired antenna.

7. A method as claimed in claim 1, wherein the antenna (21) is an etched antenna.

8. A method as claimed in claim 1, wherein the removing step is made by peeling.

9. An intermediate electronic module comprising an antenna (21) and a radio frequency micro-controller (26) electrically connected to said antenna, wherein said module comprises a transportation layer (24) to support the antenna (21) and the radio-frequency micro-controller (26) during the manufacturing steps, said transportation layer (24) being intended to be removed before the insertion of the module in an identification document.

10. An intermediate electronic module as claimed in claim 9, wherein the transportation layer (24) is made of a material belonging to the family of polyethylene or polyethylene terephtalate.

11. An identification document comprising an electronic module manufactured according to the method claimed in preceding claims 1 to 8.

12. An identification document as claimed in claim 11, wherein the identification document is a smart card.

13. An identification document as claimed in claim 11, wherein the identification document is a paper booklet.
